# EUROPEAN PATENT APPLICATION

(11) **EP 4 691 980 A1**
(43) Date of publication of application: **11.02.2026**
(21) Application number: 24781139.1
(22) Date of filing: 22.03.2024
(51) Int. Cl.: C01B 32/914, B01J 8/10, B01J 8/08

(54) **LOW-OXYGEN VANADIUM CARBIDE AND PREPARATION METHOD THEREFOR**

(30) Priority: 29.03.2023 KR 20230041138
(71) Applicant: KOREA INSTITUTE OF GEOSCIENCE AND MINERAL RESOURCES, Yuseong-gu Daejeon 34132 (KR)
(72) Inventor: ROH, Ki-Min, Daejeon 34061 (KR); KWON, Han-Jung, Jeonju-si Jeonbuk Special Self-Governing Province 54969 (KR); KIM, Sun-Kyung, Daejeon 34061 (KR); PARK, Tae-Jun, Daejeon 34386 (KR)
(74) Representative: Witte, Weller & Partner Patentanwälte mbB
(86) International application number: PCT/KR2024/003637
(87) International publication number: WO 2024/205148

(57) **Abstract**

The present invention provides a low-oxygen vanadium carbide and a preparation method therefor, the low-oxygen vanadium carbide having reduced oxygen content and being formed by mixing a vanadium oxide with a carbon compound, and then refining the particle size thereof by means of high-energy milling by using a high-energy milling apparatus, and carbonizing and reducing same by means of a vacuum heat treatment.

## Description

### [Technical Field]

The present disclosure relates to low-oxygen vanadium carbide and a method for manufacturing the same, in which the oxygen content is reduced by mixing vanadium oxide with a carbon compound, micronizing the particle size through high-energy milling using a high-energy milling device, and then forming the low-oxygen vanadium carbide through a carbothermal reduction reaction by vacuum heat treatment.

### [Background Art]

Vanadium metal is a material that readily forms carbides, nitrides, or oxides due to its high affinity with nonmetallic elements such as carbon, nitrogen, or oxygen.

Accordingly, vanadium carbide, which is produced by combining vanadium with carbon, can be relatively easily formed; however, owing to the strong affinity of vanadium for oxygen, it is not easy to synthesize a pure (low-oxygen) carbide.

In particular, because vanadium readily forms oxycarbides of the type V(CₓO₁₋ₓ) where x < 1, the manufacture of low-oxygen vanadium carbide is not easily achieved.

Specifically, although low-oxygen vanadium carbide, which is theoretically considered thermodynamically possible, is a compound of the form VCₓ in which vacancies are present at some of the carbon sites, in practice a large number of vacancies exist within the lattice. Oxygen infiltration into these vacancies occurs readily, thereby easily leading to a transformation into V(CₓO₁₋ₓ). As a result, it is very difficult to synthesize low-oxygen vanadium carbide.

Therefore, after extensive effort and long-term research, the present applicant has completed the present disclosure by obtaining low-oxygen vanadium carbide and a method for manufacturing the same, in which the oxygen content is reduced by mixing vanadium oxide with a carbon compound, micronizing the particle size through high-energy milling using a high-energy milling device, and then forming the low-oxygen vanadium carbide through a carbothermal reduction reaction by vacuum heat treatment.

### [Disclosure]

### [Technical Problem]

In order to solve the aforementioned problems, a purpose of the present disclosure is to provide a low-oxygen vanadium carbide, which is formed by reducing the oxygen content, mixing vanadium oxide with a carbon compound, micronizing the particle size through high-energy milling using a high-energy milling device, and subjecting the mixture to a carbothermal reduction reaction by vacuum heat treatment.

In addition, another purpose of the present disclosure is to provide a method for manufacturing a low-oxygen vanadium carbide, the method comprising mixing vanadium oxide with a carbon compound, micronizing the particle size through high-energy milling using a high-energy milling device, and subjecting the mixture to a carbothermal reduction reaction by vacuum heat treatment.

In addition, still another purpose of the present disclosure is to provide a use of a low-oxygen vanadium carbide, which is formed by mixing vanadium oxide with a carbon compound, micronizing the particle size through high-energy milling using a high-energy milling device, and subjecting the mixture to a carbothermal reduction reaction by vacuum heat treatment.

In addition, still another purpose of the present disclosure is to provide a low-oxygen vanadium carbide manufactured by the aforementioned method, wherein the low-oxygen vanadium carbide has a particle size ranging from 2 nm to 50 µm.

In addition, still another purpose of the present disclosure is to provide a low-oxygen vanadium carbide manufactured by the aforementioned method, wherein the low-oxygen vanadium carbide has a chemical formula of VCx, and x is in the range of 0.3 < x < 1.

In addition, still another purpose of the present disclosure is to provide a low-oxygen vanadium carbide manufactured by the aforementioned method, wherein the low-oxygen vanadium carbide has a particle size ranging from 2 nm to 50 µm.

In addition, still another purpose of the present disclosure is to provide a low-oxygen vanadium carbide manufactured by the aforementioned method, wherein the low-oxygen vanadium carbide has a chemical formula of VCx, and x is in the range of 0.3 < x < 1.

The challenges that the present disclosure is intended to solve are not limited to those mentioned above, and other challenges not mentioned will be apparent to those skilled in the art from the following description.

### [Technical Solution]

In order to achieve the purpose, an aspect of the present disclosure provides a low-oxygen vanadium carbide, comprising:
a low-oxygen vanadium carbide in which an oxygen content is reduced and a particle size is micronized through high-energy milling with an input energy ranging from 0.6 to 2.4 J/g·s,
wherein the low-oxygen vanadium carbide is formed by mixing vanadium oxide with a carbon compound, micronizing the particle size through the high-energy milling using a high-energy milling device, and subjecting the mixture of the vanadium oxide and the carbon compound to a carbothermal reduction reaction by vacuum heat treatment.

In some exemplary embodiments, the oxygen content may range from 10 ppm to 10,000 ppm.

In some exemplary embodiments, the low-oxygen vanadium carbide may have a chemical formula of VCx, and x may be in the range of 0.3 < x < 1.

In some exemplary embodiments, a molar ratio (B/A) of the carbon compound (B) to the vanadium oxide (A) may range from 6.1 to 7.5.

In some exemplary embodiments, a particle size of a mixed powder of the vanadium oxide and the carbon compound may be in the range of 2 nm to 50 µm.

In some exemplary embodiments, the vanadium oxide may be at least one selected from the group consisting of vanadium pentoxide (V₂O₅), sodium metavanadate (NaVO₃), vanadium trioxide (V₂O₃), vanadium oxytrichloride (VOCl₃), and ammonium metavanadate (H₄NVO₃).

In some exemplary embodiments, the carbon compound may be at least one selected from the group consisting of industrial carbon powder, coke, coal, coal tar, activated carbon, graphite, natural graphite, artificial graphite, carbon black, acetylene black, Ketjen black, channel black, furnace black, lamp black, thermal black, industrial diamond, and carbon fiber.

In some exemplary embodiments, the high-energy milling comprises:
after mixing the vanadium oxide and the carbon compound, introducing the mixed powder together with steel balls into a rotating container of the high-energy milling device;
and performing the high-energy milling for 10 to 100 minutes under an atmosphere of air, vacuum, nitrogen, or argon, with an input energy of 0.6 to 2.4 J/g·s,
wherein a rotating shaft may be rotated at 500 to 1500 rpm, and the rotating container may be rotated at 2000 to 3500 rpm in a direction opposite to that of the rotating shaft.

In some exemplary embodiments, the high-energy milling device may be a planetary ball mill, a SPEX mill, or an attritor.

In some exemplary embodiments, in the vacuum heat treatment,
a heat treatment temperature may range from 800 °C to 1600 °C, and
a heat treatment time may range from 10 minutes to 24 hours.

In some exemplary embodiments, the carbothermal reduction reaction may be characterized by micronizing the vanadium oxide and the carbon compound through the high-energy milling to increase a contact area and to enhance a reaction rate of the carbothermal reduction reaction.

In addition, another aspect of the present disclosure provides a method for manufacturing a low-oxygen vanadium carbide, comprising:
(a-1) mixing vanadium oxide with a carbon compound to prepare a mixed powder;
(a-2) introducing the mixed powder together with steel balls into a rotating container of a high-energy milling device;
(a-3) preparing a fine powder by performing high-energy milling under an atmosphere of air, vacuum, nitrogen, or argon, with an input energy of 0.6 to 2.4 J/g·s, while rotating a rotating shaft and the rotating container in opposite directions; and
(a-4) manufacturing the low-oxygen vanadium carbide by subjecting the fine powder to a carbothermal reduction reaction through vacuum heat treatment.

In some exemplary embodiments, in step (a-1) of mixing vanadium oxide with a carbon compound to prepare a mixed powder,
a mixing ratio of the vanadium oxide to the carbon compound may range from 1:0.2 to 1:0.7 by weight.

In some exemplary embodiments, in step (a-2) of introducing the mixed powder together with steel balls into a rotating container of a high-energy milling device,
the steel balls may be at least one selected from the group consisting of ceramic balls, metal balls, and cemented carbide balls.

In some exemplary embodiments, in step (a-3) of preparing a fine powder by performing high-energy milling under an atmosphere of air, vacuum, nitrogen, or argon, with an input energy of 0.6 to 2.4 J/g·s, while rotating a rotating shaft and the rotating container in opposite directions,
the rotating shaft may be rotated at 500 to 1500 rpm, the rotating container may be rotated at 2000 to 3500 rpm in a direction opposite to that of the rotating shaft, and the high-energy milling may be performed for 10 to 100 minutes.

In some exemplary embodiments, in step (a-4) of manufacturing the low-oxygen vanadium carbide by subjecting the fine powder to a carbothermal reduction reaction through vacuum heat treatment,
in the vacuum heat treatment,
a heat treatment temperature may range from 800 °C to 1600 °C, and
a heat treatment time may range from 10 minutes to 24 hours.

In some exemplary embodiments, the high-energy milling device may be a planetary ball mill, a SPEX mill, or an attritor.

Furthermore, another aspect of the present disclosure may provide a low-oxygen vanadium carbide that is used as a MAX phase precursor, a raw material for cemented carbide, a catalyst, or a semiconductor material.

In addition, still another aspect of the present disclosure may provide a low-oxygen vanadium carbide manufactured by the aforementioned method, wherein the low-oxygen vanadium carbide may have a particle size ranging from 2 nm to 50 µm.

In addition, still another aspect of the present disclosure may provide a low-oxygen vanadium carbide manufactured by the aforementioned method, wherein the low-oxygen vanadium carbide may have a chemical formula of VCx, and x may be in the range of 0.3 < x < 1.

Moreover, still another aspect of the present disclosure may provide a low-oxygen vanadium carbide manufactured by the aforementioned method, the low-oxygen vanadium carbide may be used as a MAX phase precursor, a raw material for cemented carbide, a catalyst, or a semiconductor material.

### [Advantageous Effects]

According to an exemplary embodiment of the present disclosure, since a low-oxygen vanadium carbide is provided, which is formed by reducing the oxygen content, mixing vanadium oxide with a carbon compound, micronizing the particle size through high-energy milling using a high-energy milling device, and subjecting the mixture to a carbothermal reduction reaction by vacuum heat treatment, the low-oxygen vanadium carbide has a low oxygen content, a small particle size, excellent physical properties, and can be used in various applications such as a MAX phase precursor, a raw material for cemented carbide, a catalyst, or a semiconductor material.

In addition, according to an exemplary embodiment of the present disclosure, the present disclosure provides a method for manufacturing a low-oxygen vanadium carbide, in which vanadium oxide and a carbon compound are mixed, the particle size is micronized through high-energy milling using a high-energy milling device, and the mixture is subjected to a carbothermal reduction reaction by vacuum heat treatment, thereby ensuring excellent process stability, enabling mass production, and providing economic advantages.

In addition, according to an exemplary embodiment of the present disclosure, there is provided a low-oxygen vanadium carbide having a particle size ranging from 2 nm to 50 µm, which is manufactured by the method for manufacturing the low-oxygen vanadium carbide, so that the low-oxygen vanadium carbide has a low oxygen content, a small particle size, excellent physical properties, and can be used in various applications such as a MAX phase precursor, a raw material for cemented carbide, a catalyst, or a semiconductor material.

In addition, according to an exemplary embodiment of the present disclosure, there is provided a low-oxygen vanadium carbide having a chemical formula of VCx, in which x is in the range of 0.3 < x < 1, manufactured by the method for manufacturing the low-oxygen vanadium carbide, so that the low-oxygen vanadium carbide has a low oxygen content, a small particle size, excellent physical properties, and can be used in various applications such as a MAX phase precursor, a raw material for cemented carbide, a catalyst, or a semiconductor material.

The effects of the present disclosure are not limited to the aforementioned effects and should be understood to include all effects that can be inferred from the configurations of the present disclosure described in the detailed description or the claims.

### [Description of Drawings]

FIG. 1 is a schematic diagram of a reaction for producing a low-oxygen vanadium carbide through a carbothermal reduction reaction of vanadium oxide and a carbon compound according to an exemplary embodiment of the present disclosure.
FIG. 2 is a process flowchart of a method for manufacturing a low-oxygen vanadium carbide according to an exemplary embodiment of the present disclosure.
FIG. 3 is a schematic diagram of a rotating plate of a high-energy milling device according to an exemplary embodiment of the present disclosure.
FIG. 4 is a transmission electron microscopy (TEM) image of a vanadium oxide-graphite mixture micronized by high-energy milling according to an exemplary embodiment of the present disclosure.
FIG. 5 is a graph showing a crystal structure of a low-oxygen vanadium carbide according to an exemplary embodiment of the present disclosure.

### [Mode for Invention]

Hereinafter, exemplary embodiments of the present disclosure will be described in detail with reference to related drawings.

The advantages and features of the present disclosure, and methods of accomplishing those advantages and features, will become apparent upon reference to the exemplary embodiments described in detail with reference to the accompanying drawings.

However, the present disclosure is not limited by the exemplary embodiments disclosed herein, but will be embodied in many and various forms. Therefore, those exemplary embodiments are provided merely to make the present disclosure complete and to give a complete picture of the scope of the present disclosure to one of ordinary skill in the art to which the present disclosure belongs, and the present disclosure shall be defined by the scope of the claims.

Further, hereinafter, in describing the present disclosure, a detailed description of a configuration determined that may unnecessarily obscure the subject matter of the present disclosure, for example, a detailed description of a known technology including the prior art may be omitted.

Hereinafter, exemplary embodiments of the present disclosure will be described in detail.

### Low-oxygen vanadium carbide

The present disclosure provides a low-oxygen vanadium carbide in which the oxygen content is reduced by mixing vanadium oxide with a carbon compound, micronizing the particle size through high-energy milling using a high-energy milling device, and then forming the low-oxygen vanadium carbide through a carbothermal reduction reaction by vacuum heat treatment.

An aspect of the present disclosure provides a low-oxygen vanadium carbide, comprising:
a low-oxygen vanadium carbide in which an oxygen content is reduced and a particle size is micronized through high-energy milling with an input energy ranging from 0.6 to 2.4 J/g·s,
wherein the low-oxygen vanadium carbide is formed by mixing vanadium oxide with a carbon compound, micronizing the particle size through the high-energy milling using a high-energy milling device, and subjecting the mixture of the vanadium oxide and the carbon compound to a carbothermal reduction reaction by vacuum heat treatment.

Since a low-oxygen vanadium carbide is provided, which is formed by reducing the oxygen content, mixing vanadium oxide with a carbon compound, micronizing the particle size through high-energy milling using a high-energy milling device, and subjecting the mixture to a carbothermal reduction reaction by vacuum heat treatment, the low-oxygen vanadium carbide has a low oxygen content, a small particle size, excellent physical properties, and can be used in various applications such as a MAX phase precursor, a raw material for cemented carbide, a catalyst, or a semiconductor material.

Vanadium metal is a material that readily forms carbides, nitrides, or oxides due to its high affinity with nonmetallic elements such as carbon, nitrogen, or oxygen.

Accordingly, vanadium carbide, which is produced by combining vanadium with carbon, can be relatively easily formed; however, owing to the strong affinity of vanadium for oxygen, it is not easy to synthesize a pure (low-oxygen) carbide.

In particular, because vanadium readily forms oxycarbides of the type V(CₓO₁₋ₓ) where x < 1, the manufacture of low-oxygen vanadium carbide is not easily achieved.

Specifically, although low-oxygen vanadium carbide, which is theoretically considered thermodynamically possible, is a compound of the form VCₓ in which vacancies are present at some of the carbon sites, in practice a large number of vacancies exist within the lattice. Oxygen infiltration into these vacancies occurs readily, thereby easily leading to a transformation into V(CₓO₁₋ₓ). As a result, it is very difficult to synthesize low-oxygen vanadium carbide.

Therefore, after extensive effort and long-term research, the present applicant has completed the present disclosure by obtaining low-oxygen vanadium carbide and a method for manufacturing the same, in which the oxygen content is reduced by mixing vanadium oxide with a carbon compound, micronizing the particle size through high-energy milling using a high-energy milling device, and then forming the low-oxygen vanadium carbide through a carbothermal reduction reaction by vacuum heat treatment.

In addition, the low-oxygen vanadium carbide of the present disclosure may be formed by mixing vanadium oxide with a carbon compound, micronizing a particle size through the high-energy milling using a high-energy milling device, and subjecting the mixture to a carbothermal reduction reaction by vacuum heat treatment.

In this case, the oxygen content may range from 10 ppm to 10,000 ppm.

When the oxygen content is within this range, an oxycarbide in the form of V(CₓO₁₋ₓ) having a high oxygen content may not be easily formed.

Preferably, the oxygen content may range from 30 ppm to 8,000 ppm, and more preferably, from 100 ppm to 2,000 ppm.

In addition, the low-oxygen vanadium carbide may have a chemical formula of VCx, and x may be in the range of 0.3 < x < 1.

Here, when the range of x is within the above range, the low-oxygen vanadium carbide may not easily form an oxycarbide in the form of V(CₓO₁₋ₓ) having a high oxygen content.

In this case, the range of x may be preferably 0.4 < x < 0.9, and more preferably 0.45 < x < 0.8.

In addition, a molar ratio (B/A) of the carbon compound (B) to the vanadium oxide (A) may range from 6.1 to 7.5.

Here, when a molar ratio (B/A) of the carbon compound (B) to the vanadium oxide (A) is within the above range, the low-oxygen vanadium carbide may not easily form an oxycarbide in the form of V(CₓO₁₋ₓ) having a high oxygen content.

In this case, the molar ratio (B/A) of the carbon compound (B) to the vanadium oxide (A) is preferably 6.3 to 7.0, and more preferably 6.45 to 6.8.

In addition, a particle size of a mixed powder of the vanadium oxide and the carbon compound may be in the range of 2 nm to 50 µm.

Here, when a particle size of the mixed powder of the vanadium oxide or the carbon compound is within the above range, a contact area between the vanadium oxide and the carbon compound may be increased, and a reaction rate of the carbothermal reduction reaction may be enhanced.

In this case, the particle size of the mixed powder of the vanadium oxide or the carbon compound is preferably 2 nm to 48 µm, and more preferably 2 nm to 45 µm.

That is, the present disclosure increases the reaction rate by reducing the particle size of the mixed powder of the raw materials, namely the vanadium oxide and the carbon compound, to 2 nm to 50 µm through a high-energy milling process, thereby manufacturing a low-oxygen vanadium carbide having a particle size of 2 nm to 50 µm and a low oxygen content.

In addition, the vanadium oxide may be at least one selected from the group consisting of vanadium pentoxide (V₂O₅), sodium metavanadate (NaVO₃), vanadium trioxide (V₂O₃), vanadium oxytrichloride (VOCl₃), and ammonium metavanadate (H₄NVO₃).

Here, when vanadium pentoxide (V₂O₅) is used as a raw material for synthesizing vanadium carbide, vanadium carbide is formed through a reaction of the vanadium pentoxide with carbon, that is, a carbothermal reduction, as shown in the following Chemical Formula 1.

V₂O₅ + 7C → 2VC + 5CO ----- (Chemical Formula 1)

In this process, theoretically, when the amount of carbon is adjusted to less than 7 moles with respect to 1 mole of vanadium pentoxide, a low-oxygen vanadium carbide in the form of VCx may be synthesized.

However, in an actual process, when the amount of carbon serving as a reducing agent is decreased, a reaction rate for the reduction is lowered, so that an oxycarbide in the form of V(CₓO₁₋ₓ) having a high oxygen content is easily formed.

Further, for forming vanadium carbide, not only an adjustment of the carbon amount but also a treatment for increasing a reaction rate of the carbothermal reduction is required.

According to the present disclosure, the reaction rate is increased by reducing the particle size of the mixed powder of the raw materials, namely vanadium pentoxide and carbon, to the above range through a high-energy milling process, thereby synthesizing a low-oxygen vanadium carbide having a low oxygen content.

In addition, the carbon compound may be at least one selected from the group consisting of industrial carbon powder, coke, coal, coal tar, activated carbon, graphite, natural graphite, artificial graphite, carbon black, acetylene black, Ketjen black, channel black, furnace black, lamp black, thermal black, industrial diamond, and carbon fiber.

Here, the carbon compound may further include a biomass, which is at least one selected from the group consisting of coffee grounds, fallen leaves, and waste wood.

In addition, the carbon compound may further include a carbon-containing reducing gas, which is at least one selected from the group consisting of carbon monoxide, methane, and hydrocarbons.

In addition, the high-energy milling may comprise:
after mixing the vanadium oxide and the carbon compound, introducing the mixed powder together with steel balls into a rotating container of the high-energy milling device;
and performing the high-energy milling for 10 to 100 minutes under an atmosphere of air, vacuum, nitrogen, or argon, with an input energy of 0.6 to 2.4 J/g·s,
wherein a rotating shaft may be rotated at 500 to 1500 rpm, and the rotating container may be rotated at 2000 to 3500 rpm in a direction opposite to that of the rotating shaft.

Furthermore, the high-energy milling device may be a planetary ball mill, a SPEX mill, or an attritor.

Here, in the planetary ball mill, steel balls are charged into a container together with raw materials, and the container performs both rotational and revolutional motions at high speed, thereby reducing the particle size of the mixed powder of the vanadium oxide and the carbon compound to the above range.

In addition, in the SPEX mill, steel balls are charged into a container together with raw materials, and the container performs high-speed vertical and horizontal vibration motions, thereby reducing the particle size of the mixed powder of the vanadium oxide and the carbon compound to the above range.

Further, in the attritor, steel balls are charged into a container together with raw materials, and energy is transferred by a rotational force of a rotor, thereby reducing the particle size of the mixed powder of the vanadium oxide and the carbon compound to the above range.

In addition, in the high-energy milling device, the rotating container containing the mixed powder of the vanadium oxide and the carbon compound is rotated in a direction opposite to a rotating direction of a rotating shaft of a rotating plate, thereby reducing the particle size of the mixed powder of the vanadium oxide and the carbon compound to the above range.

In addition, in the vacuum heat treatment,
a heat treatment temperature may range from 800 °C to 1600 °C, and
a heat treatment time may range from 10 minutes to 24 hours.

Here, when a heat treatment temperature of the vacuum heat treatment is within the above range, the low-oxygen characteristic and manufacturing efficiency of the low-oxygen vanadium carbide may be excellent.

That is, the mixed powder of the vanadium oxide and the carbon compound generated by the high-energy milling device is subjected to vacuum heat treatment at the heat treatment temperature of the vacuum heat treatment, thereby manufacturing a low-oxygen vanadium carbide having excellent low-oxygen characteristic and manufacturing efficiency.

In this case, the heat treatment temperature of the vacuum heat treatment is preferably 850 °C to 1600 °C, and more preferably 900 °C to 1600 °C.

In addition, when a heat treatment time of the vacuum heat treatment is within the above range, the low-oxygen characteristic and manufacturing efficiency of the low-oxygen vanadium carbide may be excellent.

That is, the mixed powder of the vanadium oxide and the carbon compound generated by the high-energy milling device is subjected to vacuum heat treatment for the heat treatment time of the vacuum heat treatment, thereby manufacturing a low-oxygen vanadium carbide having excellent low-oxygen characteristic and manufacturing efficiency.

In this case, the heat treatment time of the vacuum heat treatment may be preferably 20 minutes to 24 hours, and more preferably 30 minutes to 24 hours.

In addition, the carbothermal reduction reaction may be characterized by micronizing the vanadium oxide and the carbon compound through the high-energy milling to increase a contact area and to enhance a reaction rate of the carbothermal reduction reaction.

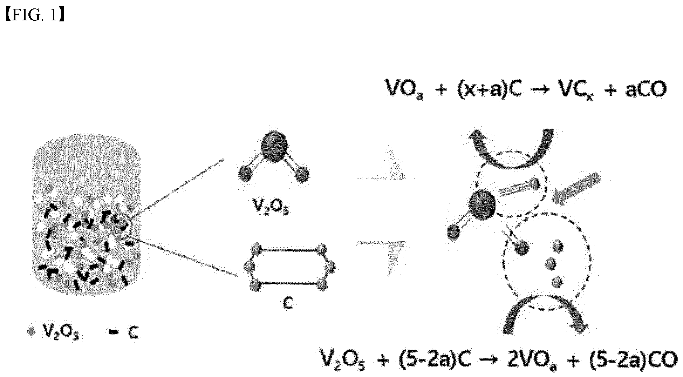

FIG. 1 is a schematic diagram of a reaction for producing a low-oxygen vanadium carbide through a carbothermal reduction reaction of vanadium oxide and a carbon compound according to an exemplary embodiment of the present disclosure.

Referring to FIG. 1, a reaction formula of a low-oxygen vanadium carbide produced through a carbothermal reduction reaction of vanadium oxide and a carbon compound is shown in the following Chemical Formula 2:

VOa + (x + a)C → VCx +aCO ------ (Chemical Formula 2)

For example, when vanadium pentoxide (V₂O₅) is used as a raw material for synthesizing the low-oxygen vanadium carbide, vanadium carbide is formed through a reaction of the vanadium pentoxide with carbon, that is, a carbothermal reduction, as shown in the following Chemical Formula 3:

V₂O₅ + (5+2x)C → 2VCx + 5CO ----- (Chemical Formula 3)

Here, the Chemical Formula 3 is obtained by combining two reaction formulas illustrated in FIG. 1.

### Method for manufacturing a low-oxygen vanadium carbide

The present disclosure provides a method for manufacturing a low-oxygen vanadium carbide, in which vanadium oxide and a carbon compound are mixed, a particle size is micronized through high-energy milling using a high-energy milling device, and the mixture is subjected to a carbothermal reduction reaction by vacuum heat treatment.

The present disclosure provides a method for manufacturing a low-oxygen vanadium carbide, comprising:
(a-1) mixing vanadium oxide with a carbon compound to prepare a mixed powder;
(a-2) introducing the mixed powder together with steel balls into a rotating container of a high-energy milling device;
(a-3) preparing a fine powder by performing high-energy milling under an atmosphere of air, vacuum, nitrogen, or argon, with an input high energy of 0.6 to 2.4 J/g·s, while rotating a rotating shaft and the rotating container in opposite directions; and
(a-4) manufacturing the low-oxygen vanadium carbide by subjecting the fine powder to a carbothermal reduction reaction through vacuum heat treatment.

Since the present disclosure provides a method for manufacturing a low-oxygen vanadium carbide by mixing vanadium oxide with a carbon compound, micronizing a particle size through high-energy milling using a high-energy milling device, and subjecting the mixture to a carbothermal reduction reaction by vacuum heat treatment, the method ensures excellent process stability, enables mass production, and provides economic advantages.

In addition, in step (a-1) of mixing vanadium oxide with a carbon compound to prepare a mixed powder,
a mixing ratio of the vanadium oxide to the carbon compound may range from 1:0.2 to 1:0.7 by weight.

Here, when a mixing ratio of the vanadium oxide to the carbon compound is within the above range by weight ratio, an oxycarbide in the form of V(CₓO₁₋ₓ) having a high oxygen content may not be easily formed.

In this case, the mixing ratio of the vanadium oxide to the carbon compound may be preferably 1:0.4 to 1:0.6 by weight ratio, and more preferably 1:0.45 to 1:0.55 by weight ratio.

In addition, in step (a-2) of introducing the mixed powder together with steel balls into a rotating container of a high-energy milling device,
the steel balls may be at least one selected from the group consisting of ceramic balls, metal balls, and cemented carbide balls.

Specifically, a material of the steel balls may be steel, tungsten, or zirconia.

Here, a shape of the steel balls may be at least one selected from the group consisting of spherical, star-shaped, horn-shaped, and columnar shapes.

In addition, in step (a-3) of preparing a fine powder by performing high-energy milling under an atmosphere of air, vacuum, nitrogen, or argon, with an input energy of 0.6 to 2.4 J/g·s, while rotating a rotating shaft and the rotating container in opposite directions,
the rotating shaft may be rotated at 500 to 1500 rpm, the rotating container may be rotated at 2000 to 3500 rpm in a direction opposite to that of the rotating shaft, and the high-energy milling may be performed for 10 to 100 minutes.

Here, the high-energy milling may be a process in which energy is applied at 0.6 to 2.4 J/g·s, a rotating shaft and a rotating container are rotated in opposite directions, and steel balls charged into the rotating container are milled by friction with the mixed powder of the vanadium oxide and the carbon compound, thereby crushing particles of the mixed powder of the vanadium oxide and the carbon compound and reducing an average particle size of the mixed powder to 2 nm to 50 µm.

In addition, the high-energy milling device may be a planetary ball mill, a SPEX mill, or an attritor.

Here, in the planetary ball mill, steel balls are charged into a container together with raw materials, and the container performs both rotational and revolutional motions at high speed, thereby reducing a particle size of the mixed powder of the vanadium oxide and the carbon compound to the above range.

In addition, in the SPEX mill, steel balls are charged into a container together with raw materials, and the container performs high-speed vertical and horizontal vibration motions, thereby reducing a particle size of the mixed powder of the vanadium oxide and the carbon compound to the above range.

Further, in the attritor, steel balls are charged into a container together with raw materials, and energy is transferred by a rotational force of a rotor, thereby reducing a particle size of the mixed powder of the vanadium oxide and the carbon compound to the above range.

In addition, in the high-energy milling device, a rotating container containing the mixed powder of the vanadium oxide and the carbon compound is rotated in a direction opposite to a rotating direction of a rotating shaft of a rotating plate, thereby reducing a particle size of the mixed powder of the vanadium oxide and the carbon compound to the above range.

In addition, in step (a-4) of manufacturing the low-oxygen vanadium carbide by subjecting the fine powder to a carbothermal reduction reaction through vacuum heat treatment,

in the vacuum heat treatment,
a heat treatment temperature may range from 800 °C to 1600 °C, and
a heat treatment time may range from 10 minutes to 24 hours.

Here, when a heat treatment temperature of the vacuum heat treatment is within the above range, the low-oxygen characteristic and manufacturing efficiency of the low-oxygen vanadium carbide may be excellent.

That is, the mixed powder of the vanadium oxide and the carbon compound generated by the high-energy milling device is subjected to vacuum heat treatment at the heat treatment temperature of the vacuum heat treatment, thereby manufacturing a low-oxygen vanadium carbide having excellent low-oxygen characteristic and manufacturing efficiency.

In this case, the heat treatment temperature of the vacuum heat treatment may be preferably 850 °C to 1600 °C, and more preferably 900 °C to 1600 °C.

Further, when a heat treatment time of the vacuum heat treatment is within the above range, the low-oxygen characteristic and manufacturing efficiency of the low-oxygen vanadium carbide may be excellent.

That is, the mixed powder of the vanadium oxide and the carbon compound generated by the high-energy milling device is subjected to vacuum heat treatment for the heat treatment time of the vacuum heat treatment, thereby manufacturing a low-oxygen vanadium carbide having excellent low-oxygen characteristic and manufacturing efficiency.

In this case, the heat treatment time of the vacuum heat treatment is preferably 20 minutes to 24 hours, and more preferably 30 minutes to 24 hours.

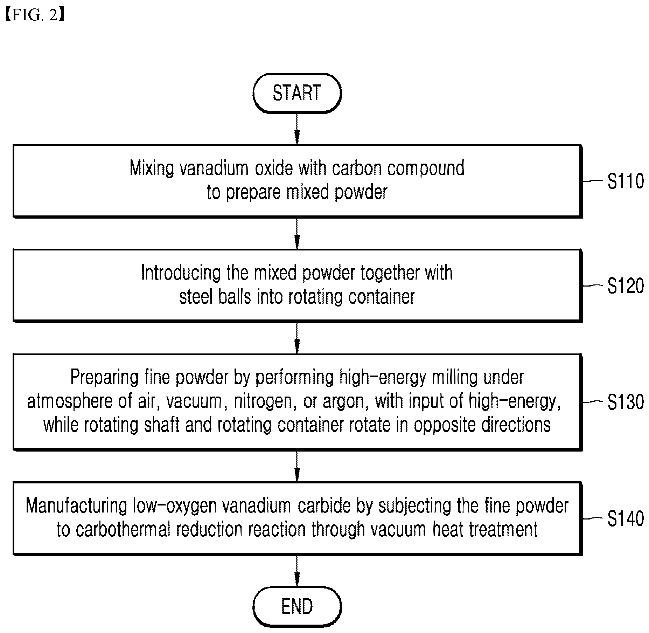

FIG. 2 is a process flowchart of a method for manufacturing a low-oxygen vanadium carbide according to an exemplary embodiment of the present disclosure.

Referring to FIG. 2, first, vanadium oxide and a carbon compound are mixed to prepare a mixed powder (S110).

Then, the mixed powder is introduced together with steel balls into a rotating container of a high-energy milling device (S120).

Subsequently, under an atmosphere of air, vacuum, nitrogen, or argon, high energy of 0.6 to 2.4 J/g·s is applied, and a rotating shaft and the rotating container are rotated in opposite directions to perform high-energy milling, thereby preparing a fine powder (S130).

Thereafter, the fine powder is subjected to vacuum heat treatment to perform a carbothermal reduction reaction, thereby manufacturing a low-oxygen vanadium carbide (S140).

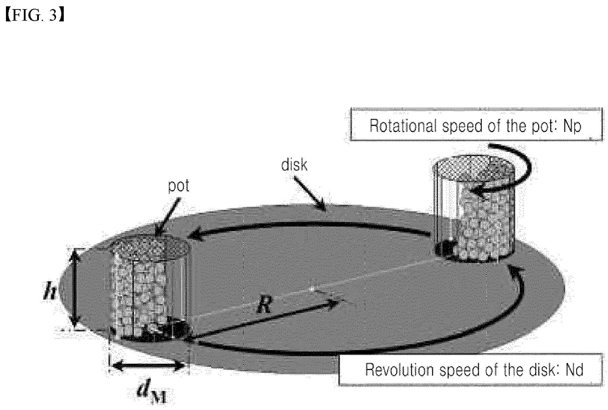

FIG. 3 is a schematic diagram of a rotating plate of a high-energy milling device according to an exemplary embodiment of the present disclosure.

Referring to FIG. 3, a rotating direction of a main shaft of a rotating plate of the high-energy milling device and a rotating direction of a rotating container containing the mixed powder of the vanadium oxide and the carbon compound are opposite to each other, and by such opposite rotational forces, a particle size of the mixed powder of the vanadium oxide and the carbon compound can be reduced to 2 nm to 50 µm.

### Use of low-oxygen vanadium carbide

The present disclosure provides a use of a low-oxygen vanadium carbide, which is formed by mixing vanadium oxide with a carbon compound, micronizing a particle size through high-energy milling using a high-energy milling device, and subjecting the mixture to a carbothermal reduction reaction by vacuum heat treatment.

The present disclosure may provide the low-oxygen vanadium carbide, the use of which is as a MAX phase precursor, a raw material for cemented carbide, a catalyst, or a semiconductor material.

### Low-oxygen vanadium carbide having a particle size of 2 nm to 50 µm

The present disclosure provides a low-oxygen vanadium carbide having a particle size of 2 nm to 50 µm, which is manufactured by the method for manufacturing the low-oxygen vanadium carbide.

The present disclosure may provide a low-oxygen vanadium carbide having a particle size of 2 nm to 50 µm, which is manufactured by the method for manufacturing the low-oxygen vanadium carbide.

Since the present disclosure provides a low-oxygen vanadium carbide having a particle size of 2 nm to 50 µm, which is manufactured by the method for manufacturing the low-oxygen vanadium carbide, the low-oxygen vanadium carbide has a low oxygen content, a small particle size, excellent physical properties, and can be used in various applications such as a MAX phase precursor, a raw material for cemented carbide, a catalyst, or a semiconductor material.

The present disclosure may provide a low-oxygen vanadium carbide, manufactured by the method for manufacturing the low-oxygen vanadium carbide, the use of which is as a MAX phase precursor, a raw material for cemented carbide, a catalyst, or a semiconductor material.

According to the present disclosure, by reducing the particle size of the mixed powder of the raw materials, namely the vanadium oxide and the carbon compound, to 2 nm to 50 µm through a high-energy milling process, a reaction rate is increased, thereby manufacturing a low-oxygen vanadium carbide having a particle size of 2 nm to 50 µm and a low oxygen content.

### Low-oxygen vanadium carbide having a chemical formula of VCx, where 0.3 < x < 1

The present disclosure provides a low-oxygen vanadium carbide having a chemical formula of VCx, where x is in the range of 0.3 < x < 1, which is manufactured by the method for manufacturing the low-oxygen vanadium carbide.

The present disclosure may provide a low-oxygen vanadium carbide having a chemical formula of VCx, where x is in the range of 0.3 < x < 1, which is manufactured by the method for manufacturing the low-oxygen vanadium carbide.

The use of the low-oxygen vanadium carbide, manufactured by the method for manufacturing the low-oxygen vanadium carbide may be as a MAX phase precursor, a raw material for cemented carbide, a catalyst, or a semiconductor material.

Since the present disclosure provides a low-oxygen vanadium carbide having a chemical formula of VCx, where x is in the range of 0.3 < x < 1, which is manufactured by the method for manufacturing the low-oxygen vanadium carbide, the low-oxygen vanadium carbide has a low oxygen content, a small particle size, excellent physical properties, and can be used in various applications such as a MAX phase precursor, a raw material for cemented carbide, a catalyst, or a semiconductor material.

According to the present disclosure, by reducing the particle size of the mixed powder of the raw materials, namely the vanadium oxide and the carbon compound, to 2 nm to 50 µm through a high-energy milling process, a reaction rate is increased, thereby manufacturing a low-oxygen vanadium carbide having a chemical formula of VCx, where x is in the range of 0.3 < x < 1.

Hereinafter, the present disclosure will be described in more detail through exemplary embodiments. However, the following exemplary embodiments are provided only for illustrating the present disclosure in greater detail, and the scope of the present disclosure is not limited to these exemplary embodiments. The exemplary embodiments may be appropriately modified or altered by those skilled in the art within the scope of the present disclosure.

### <Exemplary embodiments>

### <Exemplary embodiments 1 to 7> Preparation of low-oxygen vanadium carbide

A mixed powder of vanadium oxide and a carbon compound was prepared using the components and contents shown in Table 1 below.

Then, the mixed powder was introduced together with steel balls into a rotating container of a high-energy milling device as shown in Table 1.

Subsequently, while applying the high energy shown in Table 1 under an atmosphere of air, vacuum, nitrogen, or argon as the gas condition for particle pulverization in the high-energy milling device shown in Table 1, and by rotating a rotating shaft and a rotating container in opposite directions, high-energy milling was performed to prepare a fine powder.

Thereafter, the fine powder was subjected to vacuum heat treatment under the conditions shown in Table 1 to perform a carbothermal reduction reaction, thereby preparing a low-oxygen vanadium carbide.

### <Comparative example> Preparation of vanadium carbide

Except that a high-energy milling device was used in the exemplary embodiment 1, vanadium carbide of the comparative example was prepared in the same manner as in the exemplary embodiment 1.

**[Table 1]**

| | Exemplary Embodiment 1 | Exemplary Embodiment 2 | Exemplary Embodiment 3 | Exemplary Embodiment 4 | Exemplary Embodiment 5 | Exemplary Embodiment 6 | Exemplary Embodiment 7 | Comparative Example |
|---|---|---|---|---|---|---|---|---|
| Vanadium oxide (A) | Vanadium pentoxi de (V₂O₅) | Vanadium pentoxi de (V₂O₅) | Vanadium pentoxi de (V₂O₅) | Vanadium pentoxi de (V₂O₅) | Vanadium pentoxi de (V₂O₅) | Vanadium pentoxi de (V₂O₅) | Vanadium pentoxi de (V₂O₅) | Vanadium pentoxi de (V₂O₅) |
| Carbon compound (B) | Graphite | Graphite | Graphite | Graphite | Graphite | Graphite | Graphite | Graphite |
| Molar ratio B/A | 6.30 | 6.40 | 6.50 | 7.00 | 7.05 | 7.10 | 7.15 | 7.00 |
| Average particle size of mixed powder | 20 nm | 20 nm | 20 nm | 20 nm | 20 nm | 20 nm | 20 nm | 45 *µ*m |
| High-energy milling device | Planetary ball mill | Planetary ball mill | Planetary ball mill | Planetary ball mill | Planetary ball mill | Planetary ball mill | Planetary ball mill | Horizontal ball mill |
| Energy (J/g.s) | 0.6 ~ 2.4 | 0.6 ~ 2.4 | 0.6 ~ 2.4 | 0.6 ~ 2.4 | 0.6 ~ 2.4 | 0.6 ~ 2.4 | 0.6 ~ 2.4 | 0.1 ~ 0.2 |
| Material of steel balls | Cemented carbide | Cemented carbide | Cemented carbide | Cemented carbide | Cemented carbide | Cemented carbide | Cemented carbide | Cemented carbide |
| Rotating speed of shaft (rpm) | 250 | 250 | 250 | 250 | 250 | 250 | 250 | 150 |
| Rotating speed of container (rpm) | 500 | 500 | 500 | 500 | 500 | 500 | 500 | 150 |
| Gas condition during particle pulverization in high-energy milling device | Air | Air | Air | Air | Air | Air | Air | Air |
| Vacuum heat treatment temperature (°C) | 1500 | 1500 | 1500 | 1500 | 1500 | 1500 | 1500 | 1500 |
| Vacuum heat treatment time | 3 hours | 3 hours | 3 hours | 3 hours | 3 hours | 3 hours | 3 hours | 3 hours |
| Oxygen content of low-oxygen vanadium carbide (ppm) | 3680 | 2260 | 3670 | 3870 | 3370 | 1840 | 1440 | 12000 |
| Chemical formula of low-oxygen vanadium carbide (VCx) | x=0.52 | x=0.62 | x=0.64 | x=0.80 | x=0.81 | x=0.86 | x=0.90 | x=0.80 |
| Average particle size of low-oxygen vanadium carbide | 20 nm | 20 nm | 20 nm | 20 nm | 20 nm | 20 nm | 20 nm | 10 *µ*m |

Referring to Table 1, the low-oxygen vanadium carbides of exemplary the embodiments 1 to 7 had an oxygen content of 1440 ppm to 3870 ppm, which was remarkably lower than the oxygen content of 12,000 ppm of the vanadium carbide of the comparative example.

Accordingly, it was confirmed that the low-oxygen vanadium carbides of the exemplary embodiments 1 to 7 contained low oxygen.

In addition, the average particle size of the low-oxygen vanadium carbides of the exemplary embodiments 1 to 7 was 20 nm, which was significantly smaller than the average particle size of 10 µm of the vanadium carbide of the comparative example.

Therefore, it was confirmed that the low-oxygen vanadium carbides of the exemplary embodiments 1 to 7 had remarkably lower oxygen contents and significantly smaller average particle sizes compared with the Comparative Example.

### <Exemplary embodiments 8 to 13> Preparation of low-oxygen vanadium carbide

A mixed powder of vanadium oxide and a carbon compound was prepared using the components and contents shown in Table 2 below.

Then, the mixed powder was introduced together with steel balls into a rotating container of a high-energy milling device as shown in Table 2.

Subsequently, while applying the high energy shown in Table 2 under an atmosphere of air, vacuum, nitrogen, or argon as the gas condition for particle pulverization in the high-energy milling device shown in Table 2, and by rotating a rotating shaft and a rotating container in opposite directions, high-energy milling was performed to prepare a fine powder.

Thereafter, the fine powder was subjected to vacuum heat treatment under the conditions shown in Table 2 to perform a carbothermal reduction reaction, thereby preparing a low-oxygen vanadium carbide.

**[Table 2]**

| | Exemplar y Embodim ent 8 | Exemplar y Embodim ent 9 | Exemplar y Embodim ent 10 | Exemplar y Embodim ent 11 | Exemplar y Embodim ent 12 | Exemplar y Embodim ent 13 |
|---|---|---|---|---|---|---|
| Vanadium oxide (A) | Vanadium pentoxide (V₂O₅) | Sodium metavanad ate (NaVO₃) | Vanadium pentoxide (V₂O₅) | Vanadium trioxide (V₂O₃) | Vanadium oxychloride (VOCl₃) | Ammonium metavanadate (H₄NVO₃) |
| Carbon compound (B) | Coke | Coal | Industrial carbon powder | Graphite | Graphite | Industrial carbon powder |
| Molar ratio B/A | 6.5 | 6.8 | 7.5 | 7.0 | 6.2 | 6.1 |
| Average particle size of mixed powder | 20 nm | 2 nm | 100 nm | 50 nm | 20 *µ*m | 50 *µ*m |
| High-energy milling device | Planetary ball mill | Planetary ball mill | SPEX mill | Planetary ball mill | Attritor | Planetary ball mill |
| Energy (J/g.s) | 0.6 ~ 2.4 | 0.6 ~ 2.4 | 0.6 ~ 2.4 | 0.6 ~ 2.4 | 0.6 ~ 2.4 | 0.6 ~ 2.4 |
| Material of steel balls | Steel | Zirconia | Zirconia | Steel | Tungsten | Tungsten |
| Rotating speed of shaft (rpm) | 1000 | 2000 | 1500 | 1500 | 500 | 500 |
| Rotating speed of container (rpm) | 3000 | 2500 | 3500 | 3500 | 2000 | 2000 |
| Gas condition during particle pulverization in high-energy milling device | Vacuum | Nitrogen | Nitrogen | Nitrogen | Argon | Argon |
| Vacuum heat treatment temperature (°C) | 1300 | 1000 | 800 | 1100 | 1500 | 1600 |
| Vacuum heat treatment time | 1 hour | 4 hours | 24 hours | 2 hours | 30 minutes | 10 minutes |

### <Experimental examples>

### <Experimental example 1> TEM image of vanadium oxide-graphite composite micronized by high-energy milling

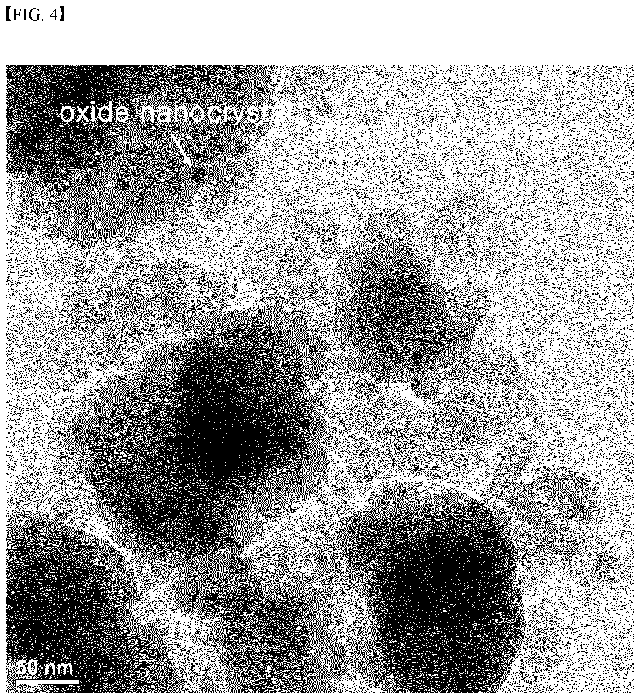

A transmission electron microscopy (TEM) image of the vanadium oxide-graphite composite micronized by high-energy milling, which was prepared in the exemplary embodiment 1, is shown in FIG. 4.

FIG. 4 is a TEM image of a vanadium oxide-graphite mixture micronized by high-energy milling according to the exemplary embodiment 1.

Referring to FIG. 4, in the vanadium oxide-graphite composite micronized by high-energy milling according to the exemplary embodiment 1, nanocrystalline vanadium oxide having a grain size of about 20 nm and amorphous carbon (derived from graphite) having a particle size of about 100 nm were identified.

### <Experimental example 2>

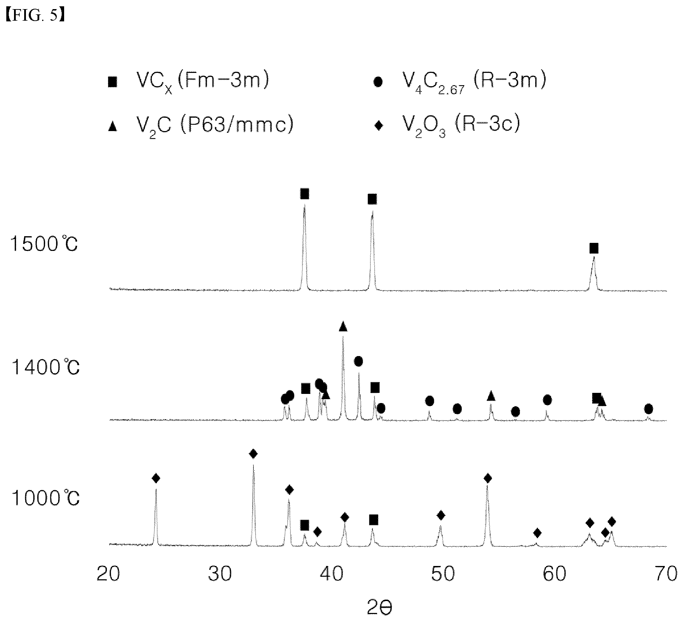

An X-ray diffraction (XRD) graph of the crystal structure of the low-oxygen vanadium carbide prepared in Exemplary Embodiment 1 is shown in FIG. 5.

FIG. 5 is a graph showing a crystal structure of a low-oxygen vanadium carbide according to the exemplary embodiment 1.

Referring to FIG. 5, in the low-oxygen vanadium carbide according to the exemplary embodiment 1, as the vacuum heat treatment temperature increased from 1000 °C to 1500 °C, the oxygen content decreased and the carbide content increased, and at 1500 °C, the sample was confirmed to consist entirely of the low-oxygen vanadium carbide.

In the above, exemplary embodiments of low-oxygen vanadium carbide and the method for manufacturing the low-oxygen vanadium carbide according to the present disclosure have been described. Moreover, it will be appreciated that various modifications to these exemplary embodiments are possible without departing from the scope of the present disclosure.

The scope of the present disclosure should therefore not be limited to those exemplary embodiments described above, but should be defined by the following claims and their equivalents.

In other words, the foregoing exemplary embodiments are to be understood as illustrative rather than restrictive in all respects, and the scope of the present disclosure is indicated by the following claims rather than the detailed description. All modifications or variations derived from the meaning, scope, and equivalent concepts of the claims should be interpreted as being included within the scope of the present disclosure.

### [Industrial Applicability]

The present disclosure is applicable to the manufacture of low-oxygen vanadium carbide.

## Claims

1. A low-oxygen vanadium carbide, comprising:
a low-oxygen vanadium carbide in which an oxygen content is reduced and a particle size is micronized through high-energy milling with an input energy ranging from 0.6 to 2.4 J/g·s,
wherein the low-oxygen vanadium carbide is formed by mixing vanadium oxide with a carbon compound, micronizing the particle size through the high-energy milling using a high-energy milling device, and subjecting the mixture of the vanadium oxide and the carbon compound to a carbothermal reduction reaction by vacuum heat treatment.

2. The low-oxygen vanadium carbide of claim 1,
wherein the oxygen content ranges from 10 ppm to 10,000 ppm.

3. The low-oxygen vanadium carbide of claim 1,
wherein the low-oxygen vanadium carbide has a chemical formula of VCx, and
wherein x is in the range of 0.3 < x < 1.

4. The low-oxygen vanadium carbide of claim 1,
wherein a molar ratio (B/A) of the carbon compound (B) to the vanadium oxide (A) ranges from 6.1 to 7.5.

5. The low-oxygen vanadium carbide of claim 1,
wherein a particle size of a mixed powder of the vanadium oxide and the carbon compound is in the range of 2 nm to 50 µm.

6. The low-oxygen vanadium carbide of claim 1,
wherein the vanadium oxide is at least one selected from the group consisting of vanadium pentoxide (V₂O₅), sodium metavanadate (NaVO₃), vanadium trioxide (V₂O₃), vanadium oxytrichloride (VOCl₃), and ammonium metavanadate (H₄NVO₃).

7. The low-oxygen vanadium carbide of claim 1,
wherein the carbon compound is at least one selected from the group consisting of industrial carbon powder, coke, coal, coal tar, activated carbon, graphite, natural graphite, artificial graphite, carbon black, acetylene black, Ketjen black, channel black, furnace black, lamp black, thermal black, industrial diamond, and carbon fiber.

8. The low-oxygen vanadium carbide of claim 1,
wherein the high-energy milling comprises:
after mixing the vanadium oxide and the carbon compound, introducing the mixed powder together with steel balls into a rotating container of the high-energy milling device;
and performing the high-energy milling for 10 to 100 minutes under an atmosphere of air, vacuum, nitrogen, or argon, with an input energy of 0.6 to 2.4 J/g·s,
wherein a rotating shaft is rotated at 500 to 1500 rpm, and the rotating container is rotated at 2000 to 3500 rpm in a direction opposite to that of the rotating shaft.

9. The low-oxygen vanadium carbide of claim 1,
wherein the high-energy milling device is a planetary ball mill, a SPEX mill, or an attritor.

10. The low-oxygen vanadium carbide of claim 1,
wherein in the vacuum heat treatment,
a heat treatment temperature ranges from 800 °C to 1600 °C, and
a heat treatment time ranges from 10 minutes to 24 hours.

11. The low-oxygen vanadium carbide of claim 1,
wherein the carbothermal reduction reaction is **characterized by** micronizing the vanadium oxide and the carbon compound through the high-energy milling to increase a contact area and to enhance a reaction rate of the carbothermal reduction reaction.

12. A method for manufacturing a low-oxygen vanadium carbide, comprising:
(a-1) mixing vanadium oxide with a carbon compound to prepare a mixed powder;
(a-2) introducing the mixed powder together with steel balls into a rotating container of a high-energy milling device;
(a-3) preparing a fine powder by performing high-energy milling under an atmosphere of air, vacuum, nitrogen, or argon, with an input energy of 0.6 to 2.4 J/g·s, while rotating a rotating shaft and the rotating container in opposite directions; and
(a-4) manufacturing the low-oxygen vanadium carbide by subjecting the fine powder to a carbothermal reduction reaction through vacuum heat treatment.

13. The method of claim 12,
wherein in step (a-1) of mixing vanadium oxide with a carbon compound to prepare a mixed powder,
a mixing ratio of the vanadium oxide to the carbon compound ranges from 1:0.2 to 1:0.7 by weight.

14. The method of claim 12,
wherein in step (a-2) of introducing the mixed powder together with steel balls into a rotating container of a high-energy milling device,
the steel balls are at least one selected from the group consisting of ceramic balls, metal balls, and cemented carbide balls.

15. The method of claim 12,
wherein in step (a-3) of preparing a fine powder by performing high-energy milling under an atmosphere of air, vacuum, nitrogen, or argon, with an input energy of 0.6 to 2.4 J/g·s, while rotating a rotating shaft and the rotating container in opposite directions,
the rotating shaft is rotated at 500 to 1500 rpm, the rotating container is rotated at 2000 to 3500 rpm in a direction opposite to that of the rotating shaft, and the high-energy milling is performed for 10 to 100 minutes.

16. The method of claim 12,
wherein in step (a-4) of manufacturing the low-oxygen vanadium carbide by subjecting the fine powder to a carbothermal reduction reaction through vacuum heat treatment,
in the vacuum heat treatment,
a heat treatment temperature ranges from 800 °C to 1600 °C, and
a heat treatment time ranges from 10 minutes to 24 hours.

17. The low-oxygen vanadium carbide according to any one of claims 1 to 11,
wherein the low-oxygen vanadium carbide is used as a MAX phase precursor, a raw material for cemented carbide, a catalyst, or a semiconductor material.

18. The low-oxygen vanadium carbide manufactured by the method according to any one of claims 12 to 16,
wherein the low-oxygen vanadium carbide has a particle size ranging from 2 nm to 50 µm.

19. The low-oxygen vanadium carbide manufactured by the method according to any one of claims 12 to 16,
wherein the low-oxygen vanadium carbide has a chemical formula of VCx, and x is in the range of 0.3 < x < 1.

20. The low-oxygen vanadium carbide manufactured by the method according to any one of claims 12 to 16,
wherein the low-oxygen vanadium carbide is used as a MAX phase precursor, a raw material for cemented carbide, a catalyst, or a semiconductor material.

## Amended claims

### Amended claims under Art. 19.1 PCT

1. (Amended) A low-oxygen vanadium carbide, comprising:
a low-oxygen vanadium carbide in which an oxygen content is reduced and a particle size is micronized through high-energy milling with an input energy ranging from 0.6 to 2.4 J/g·s,
wherein the low-oxygen vanadium carbide is formed by mixing vanadium oxide with a carbon compound, micronizing the particle size through the high-energy milling using a high-energy milling device with an input energy of 0.6 to 2.4 J/g·s while rotating a rotating shaft and the rotating container in opposite directions, and subjecting the mixture of the vanadium oxide and the carbon compound to a carbothermal reduction reaction by vacuum heat treatment.

2. The low-oxygen vanadium carbide of claim 1,
wherein the oxygen content ranges from 10 ppm to 10,000 ppm.

3. The low-oxygen vanadium carbide of claim 1,
wherein the low-oxygen vanadium carbide has a chemical formula of VCx, and
wherein x is in the range of 0.3 < x < 1.

4. The low-oxygen vanadium carbide of claim 1,
wherein a molar ratio (B/A) of the carbon compound (B) to the vanadium oxide (A) ranges from 6.1 to 7.5.

5. The low-oxygen vanadium carbide of claim 1,
wherein a particle size of a mixed powder of the vanadium oxide and the carbon compound is in the range of 2 nm to 50 µm.

6. The low-oxygen vanadium carbide of claim 1,
wherein the vanadium oxide is at least one selected from the group consisting of vanadium pentoxide (V₂O₅), sodium metavanadate (NaVO₃), vanadium trioxide (V₂O₃), vanadium oxytrichloride (VOCl₃), and ammonium metavanadate (H₄NVO₃).

7. The low-oxygen vanadium carbide of claim 1,
wherein the carbon compound is at least one selected from the group consisting of industrial carbon powder, coke, coal, coal tar, activated carbon, graphite, natural graphite, artificial graphite, carbon black, acetylene black, Ketjen black, channel black, furnace black, lamp black, thermal black, industrial diamond, and carbon fiber.

8. The low-oxygen vanadium carbide of claim 1,
wherein the high-energy milling comprises:
after mixing the vanadium oxide and the carbon compound, introducing the mixed powder together with steel balls into a rotating container of the high-energy milling device;
and performing the high-energy milling for 10 to 100 minutes under an atmosphere of air, vacuum, nitrogen, or argon, with an input energy of 0.6 to 2.4 J/g·s,
wherein a rotating shaft is rotated at 500 to 1500 rpm, and the rotating container is rotated at 2000 to 3500 rpm in a direction opposite to that of the rotating shaft.

9. The low-oxygen vanadium carbide of claim 1,
wherein the high-energy milling device is a planetary ball mill, a SPEX mill, or an attritor.

10. The low-oxygen vanadium carbide of claim 1,
wherein in the vacuum heat treatment,
a heat treatment temperature ranges from 800 °C to 1600 °C, and
a heat treatment time ranges from 10 minutes to 24 hours.

11. The low-oxygen vanadium carbide of claim 1,
wherein the carbothermal reduction reaction is **characterized by** micronizing the vanadium oxide and the carbon compound through the high-energy milling to increase a contact area and to enhance a reaction rate of the carbothermal reduction reaction.

12. A method for manufacturing a low-oxygen vanadium carbide, comprising:
(a-1) mixing vanadium oxide with a carbon compound to prepare a mixed powder;
(a-2) introducing the mixed powder together with steel balls into a rotating container of a high-energy milling device;
(a-3) preparing a fine powder by performing high-energy milling under an atmosphere of air, vacuum, nitrogen, or argon, with an input energy of 0.6 to 2.4 J/g·s, while rotating a rotating shaft and the rotating container in opposite directions; and
(a-4) manufacturing the low-oxygen vanadium carbide by subjecting the fine powder to a carbothermal reduction reaction through vacuum heat treatment.

13. The method of claim 12,
wherein in step (a-1) of mixing vanadium oxide with a carbon compound to prepare a mixed powder,
a mixing ratio of the vanadium oxide to the carbon compound ranges from 1:0.2 to 1:0.7 by weight.

14. The method of claim 12,
wherein in step (a-2) of introducing the mixed powder together with steel balls into a rotating container of a high-energy milling device,
the steel balls are at least one selected from the group consisting of ceramic balls, metal balls, and cemented carbide balls.

15. The method of claim 12,
wherein in step (a-3) of preparing a fine powder by performing high-energy milling under an atmosphere of air, vacuum, nitrogen, or argon, with an input energy of 0.6 to 2.4 J/g·s, while rotating a rotating shaft and the rotating container in opposite directions,
the rotating shaft is rotated at 500 to 1500 rpm, the rotating container is rotated at 2000 to 3500 rpm in a direction opposite to that of the rotating shaft, and the high-energy milling is performed for 10 to 100 minutes.

16. The method of claim 12,
wherein in step (a-4) of manufacturing the low-oxygen vanadium carbide by subjecting the fine powder to a carbothermal reduction reaction through vacuum heat treatment,
in the vacuum heat treatment,
a heat treatment temperature ranges from 800 °C to 1600 °C, and
a heat treatment time ranges from 10 minutes to 24 hours.

17. (Amended) The low-oxygen vanadium carbide according to any one of claims 1 to 11,
wherein the low-oxygen vanadium carbide has an oxygen content ranging from 10 ppm to 10,000 ppm, and is used as a MAX phase precursor, a raw material for cemented carbide, a catalyst, or a semiconductor material.

18. (Amended) The low-oxygen vanadium carbide manufactured by the method according to any one of claims 12 to 16,
wherein the low-oxygen vanadium carbide has a particle size ranging from 2 nm to 50 µm and an oxygen content ranging from 10 ppm to 10,000 ppm.

19. (Amended) The low-oxygen vanadium carbide manufactured by the method according to any one of claims 12 to 16,
wherein the low-oxygen vanadium carbide has an oxygen content ranging from 10 ppm to 10,000 ppm and a chemical formula of VCx, where x is in the range of 0.3 < x < 1.

20. (Amended) The low-oxygen vanadium carbide manufactured by the method according to any one of claims 12 to 16,
wherein the low-oxygen vanadium carbide has an oxygen content ranging from 10 ppm to 10,000 ppm, and is used as a MAX phase precursor, a raw material for cemented carbide, a catalyst, or a semiconductor material.
